# EUROPEAN PATENT APPLICATION

(11) **EP 2 808 538 A1**
(43) Date of publication of application: **03.12.2014**
(21) Application number: 12865701.2
(22) Date of filing: 25.01.2012
(51) Int. Cl.: F03B 13/12

(54) **MARINE POWER GENERATING SYSTEM AND MARINE POWER GENERATING METHOD**

(30) Priority: 17.01.2012 JP 2012007521
(71) Applicant: Nishioka, Toshihisa, Kobe-shi, Hyogo 658-0022 (JP)
(72) Inventor: Nishioka, Toshihisa, Kobe-shi, Hyogo 658-0022 (JP)
(74) Representative: Horn Kleimann Waitzhofer
(86) International application number: PCT/JP2012/051538
(87) International publication number: WO 2013/108412

(57) **Abstract**

[Problem] To provide a marine power generation system which is engineered to be able carry out power generation stably and highly efficiently, using the large source of energy even in ocean currents having insufficient speeds to create a water current, similar to a water discharge from a dam, which is ideal for hydroelectricity.

[Solution] As an example of a water intake structure (10), a sea surface floatation object floats on the sea by buoyancy, and has an aperture part (12) through which seawater is taken therein. A water guide pipe (20) is underwater, which secures a space underwater. One end of the water guide pipe (20) is connected to the sea surface floatation object (10), and the seawater which is taken in from the sea surface floatation object which is the water intake structure (10), is introduced downward under the sea surface. Power generators (30) which generate power from either the falling motion of the seawater or water pressure are in the water guide pipe (20), and carry out power generation. A submersible body (40) is in the water, and an accumulation space (41) is provided which takes in the seawater which is discharged from another end of the water guide pipe (20). The seawater which is taken into the accumulation space (41) in the submersible body (40) is discharged outward from the submersible body (40) by a discharge part (50).

## Description

### Technical Field

This invention relates to a marine power generation system and a marine power generating method.

### Background Art

With the rapid increase of the energy demands in the global scale, various research and development are actively promoted for utilizing the natural energy source without the fear of the drying up and the pollution as the new energy source or the alternative energy source instead of the traditional fossil fuels such as oil and liquefied natural gas (LNG), and nuclear energy which we are now depending on.

As the power generation method for utilizing the natural energy source, the wind power generation for utilizing the wind power and the marine power generating for utilizing the tidal current source are researched and developed. Regarding the wind power generation, the generated power amount is unstable because of the fluctuation of the wind amount. However, the regarding the marine power generating, the generated power amount is stable because the tidal current is relatively stable. Therefore, the marine power generation system is expected as the stable power generation system compared with the wind power generation system.

NISHIOKA Toshihisa, the inventor of this invention, as the professor of the marine engineering field at the Georgia Institute of Technology and the Faculty of Maritime Sciences, KOBE University Graduate School of Maritime Sciences, has promoted the power generation for utilizing the marine power, which tidal current energy is huge amount but not enough speed for power generation. NISHIOKA Toshihisa has been studied the possibility of high efficient and stable power generation system utilizing tidal current energy.

In order to obtain power generation by driving the massive power generating turbine rotationally, the speed and the pressure of the medium running through the massive power generating turbine are required to some extent. However, tidal current generated in the marine is not enough for driving the massive power generating turbine rotationally.

One of the places where the tidal current speed is relatively large in the world is Strait of Dover. The tidal current of Strait of Dover is about 6 knots, 12 kilometers per hour at maximum.

As the technology of the marine power generation utilizing the tidal current of the Strait of Dover, "Strait of Dover tidal current power generation system" (Prior art 1 : JP 2009-270491) is known. This prior art discloses follows. The power generating facility is constructed by digging plural tunnels for embedding the power generation system. The waterwheels are installed onto the Strait of Dover floor where the above of the embedded power generation system and connected to the power generation system. The motion energy of the tidal current is converted into the rotation energy by the blades of waterwheel, the power generation system are driven by the rotation energy. The depth of the Strait of Dover is about 60 meters, so the waterwheel should be installed under the depth of 40 meters because the large vessels which has about 35 meters of waterline in general.

The prior hydroelectric power generation obtains the electromotive force by rotating the large propeller or the large turbine rapidly by utilizing the water pressure. For example, the hydroelectric power generation utilizing the Pelton turbine requires the high speed water flow to rotate rapidly the Pelton turbine by hitting the water flow to its blades. For example, the hydroelectric power generation utilizing the Francis turbine requires the high pressure water flow to rotate rapidly the Francis turbine by applying the water pressure to its blades and discharge to the atmospheric pressure.

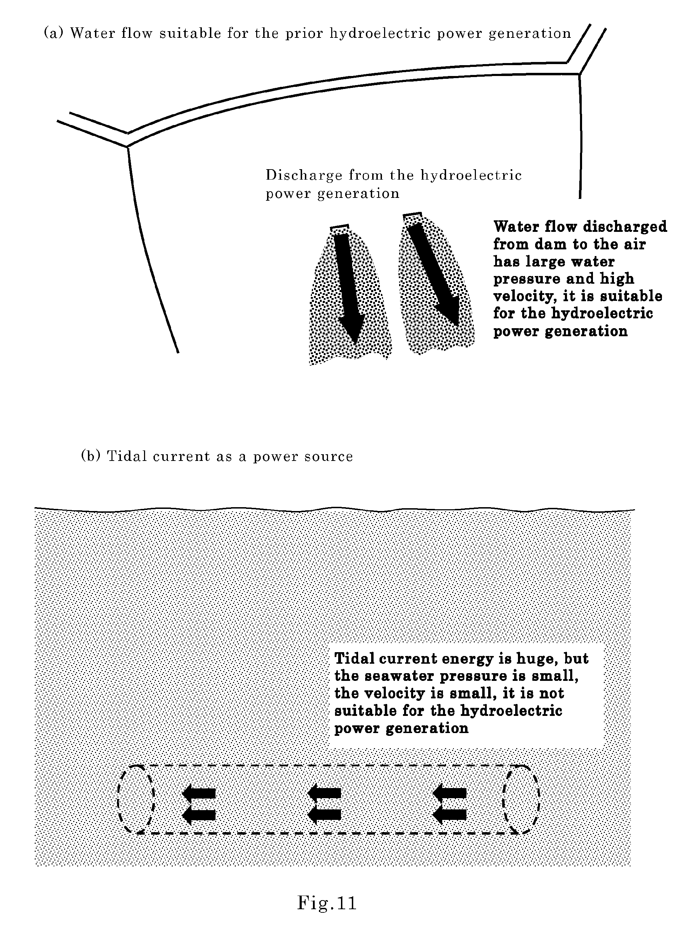

If the tidal current is utilized as the power source of the prior hydroelectric power generation, the total amount of the energy included in the tidal current is huge enough, but there is not enough speed for rotating the propeller or turbine applied in prior power generation installed in the tidal current and there is not enough pressure between the water pass in front and behind the propeller or the turbine for rotating them normally. Fig.11 is a schematic view showing the problem in the prior marine power generation system. As shown in Fig.11, the speed of the tidal current is relatively show, it is difficult for rotating the water wheel or turbine in the required rotation speed by introducing the tidal current to the power generator. Therefore the tidal current is not suitable as the power source for the prior power generation system. The improvement is required for the waterwheel and the turbine in the generator for securing the required rotation speed of the waterwheel and the turbine by utilizing the tidal current as the power source.

The following prior arts are known as the marine power generation system which can generate electricity high efficiently and stably by utilizing the tidal current even if the speed of the tidal current is not enough for the generator.

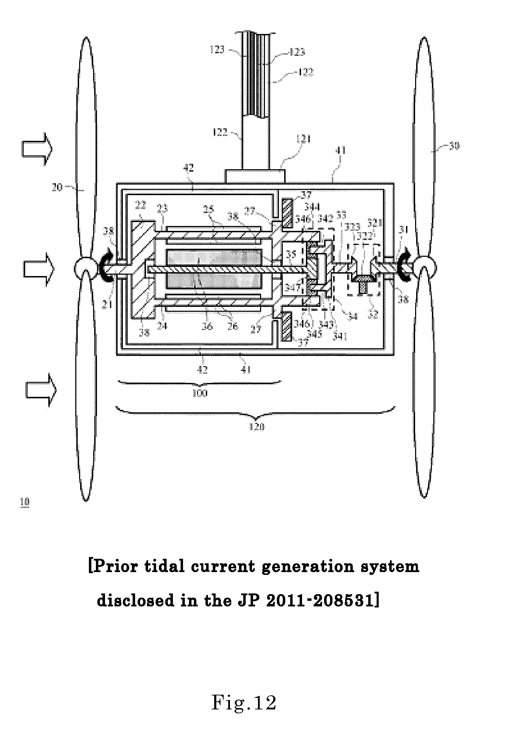

For example, the marine power generation system disclosed in the prior art 2 (JP 2011-208531) comprises the first propeller and the second propeller which rotation direction is the same each other driven by the tidal current. Both the first propeller and the second propeller are combined and connected via the acceleration mechanism. The acceleration mechanism is disclosed as the planetary gear mechanism which is the combined mechanism of the inner gear, the planetary gear and the sun gear. This prior art tries to accelerate the rotation speed by utilizing the acceleration mechanism. Fig.12 is a schematic view showing the marine power generation system disclosed in the prior art 2.

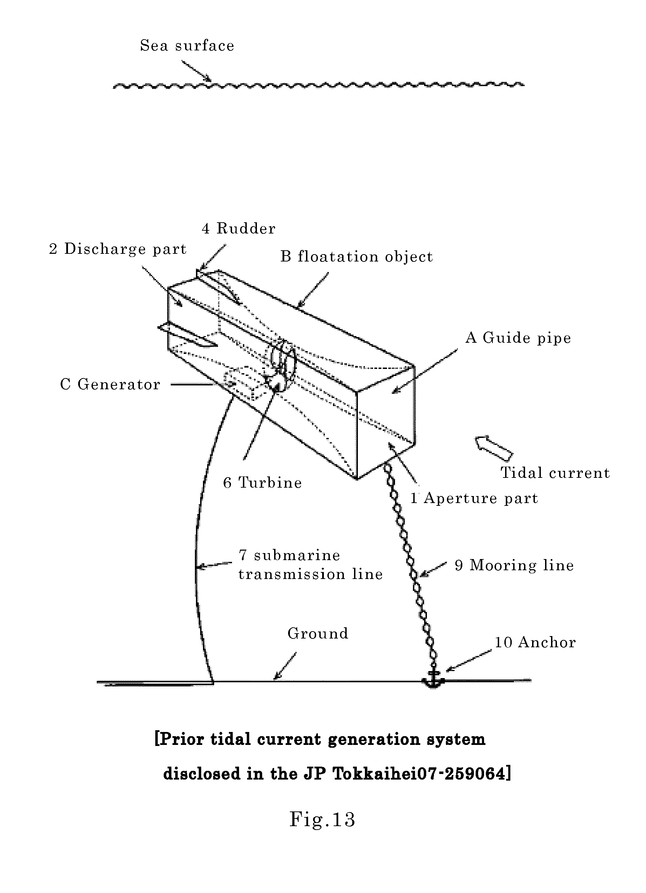

For example, the marine power generation system disclosed in the prior art 3 (JP Tokkai-Hei07-259064) comprises a submarine facility for the marine power generation moored in the marine where the tidal current is stable in its speed and direction. Fig.13 is a schematic view showing the submarine facility for the marine power generation disclosed in the prior art 3. The floating body B comprising the guide pipe A and the generator C is moored in the predetermined depth in the tidal current which head is facing to the tidal current by the mooring ropes 9 and the anchor 10. The tidal current energy running through the guide pipe A is converted into the electric energy by the propeller 6 and the generator C, the generated electricity is transmitted to the ground facility by the transmission cable. The guide pipe is equipped with a neck part at the center in a flowing direction in order to accelerate the water flow at the installation portion of the propeller 6, and is equipped with a taper from the center to the terminal inlet and the terminal outlet to enlarge the cross-sectional area gradually.

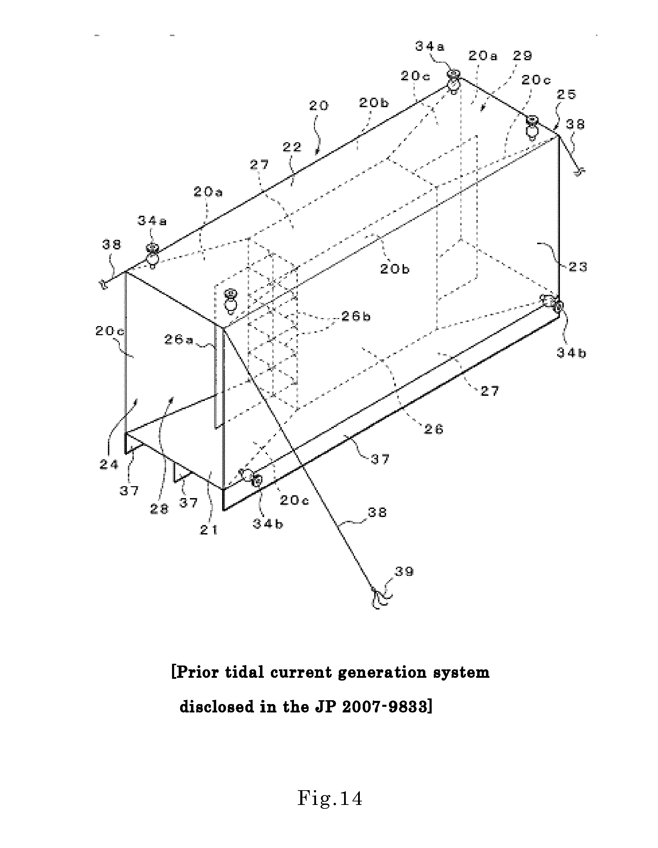

For example, the marine power generation system disclosed in the prior art 4 (JP 2007-9833) is also comprises a submarine facility for the marine power generation moored in the marine where the tidal current is stable in its speed and direction. Fig.14 is a schematic view showing the submarine facility for the marine power generation disclosed in the prior art 4. As shown in Fig.14, the submarine facility comprises a first water guide pipe which has an inlet and an outlet at the both terminal, a second water guide pipe installed in the center portion of the first water guide pipe, a propeller supported rotatably to the inside of the second water guide pipe, and a generator for generating by the rotation of the propeller. The first water guide pipe and the second water guide pipe are equipped with a neck part at the center in a flowing direction in order to accelerate the water flow at the center portion, and are equipped with a taper from the center to the terminal inlet and the terminal outlet to enlarge the cross-sectional area gradually. In short, the marine power generation system disclosed in the prior art 4 has dual pipe structure composed by the second water guide pipe in the first water guide pipe. The tidal current introduced in the first water guide pipe from the inlet is divided into the flow to the second water guide pipe (inner flow) and the flow to the gap between the first water guide pipe and the second water guide pipe (surrounding flow), and merged at the outlet portion of the second water guide pipe. The ejector effect for extracting the inner water flow by the outer water flow is obtained.
Prior art 1: JP 2009-270491
Prior art 2: JP2011-208531
Prior art 3: JP Tokkai-Hei07-259064
Prior art 4: JP 2007-9833

### Disclosure of the invention

### The problems to be solved

The above conventional marine power generation systems have the following problem.

The marine power generation system disclosed in the prior 1 JP 2009-270491 discloses that the ideal installation place is the Strait of Dover. The tidal current has huge amount of energy. However, the speed is slow and the pressure is not enough for rotating the propeller and the turbine of the power generator. Therefore, it is necessary for somewhat improvement onto the propeller and the turbine. However, there is no disclosure about improvement of the propeller and the turbine. The normal prior propeller and the turbine are disclosed. The technology disclosed in prior 1 is not enough for obtaining the electromotive force by rotating the large scale power generator efficiently.

Next, according to the prior art 2 JP 2011-208530, the first propeller and the second propeller which rotate in the same rotation direction are combined and accelerated by connecting via the accelerating mechanism. However, the rotating speed of the first propeller and the second propeller is very low, so the rotary gear ratio becomes too large to drive the large scale power generator in the normal rotation speed. The required torque for rotating the large scale power generator in the normal speed is generated by the torque obtained from the tidal current via the rotary gear, so the rotary gear faces large mechanical load. The mechanical load is beyond the mechanical strength to break.

Next, according to the prior art 3 JP Tokkai-Hei07-259064, the cross-sectional area of the center portion of the guide pipe A is smaller than the that of the inlet 1, so the flow speed at the propeller G is accelerated. However, there is rotational resistance of the propeller 6 and the passage resistance of the guide pipe A, the flow amount of the passing through the guide pipe A becomes smaller than that of the flow surrounding of the floating body B. In result, depending on the difference of the flow amount between the inside and the outside of the guide pipe A, large pressure proportional to the cross sectional area in the flowing direction works on the floating body B. It is difficult for the floating body 6 to be sustained at the predetermined position by the mooring rope 9.

In addition, the difference of the cross sectional area between the center portion of the guide pipe A and the inlet 1 should become larger in order to accelerate the flow of the guide pipe A up to enough for rotating the power generator in normal speed, but the size of the floating body B becomes too large compared to the that of the working propeller.

In addition, it is difficult for the floating body B to be sustained at the predetermined direction stably because the floating body B is moored at the predetermined depth in the floating state only by the mooring rope 9.

Next, according to the prior art 4 JP 2007-9833, the cross-sectional area of the center portion of the first water guide pipe is smaller than the that of the inlet 1, so the flow speed at the propeller is accelerated. However, compared with the prior art 3, the prior art 4 has the ejector effect by merging the inner flow and the outer flow of the second water guide pipe. The difference of the flow amount between the inner flow and the outer flow become smaller by the ejector effect, the floating body become stable by the mooring ropes. However, the floating body B is moored at the undersea depth only by mooring ropes 9, so it is very difficult for the floating body to be sustained in sustained at the predetermined position by the mooring rope 9. The problem is the same as that explained in the prior art 3.

The same as the prior art 3, the prior art 4 has the same problem that the difference of the cross sectional area between the center portion of the guide pipe A and the inlet 1 should become larger in order to accelerate the flow of the guide pipe A up to enough for rotating the power generator in normal speed, but the size of the floating body B becomes too large compared to the that of the working propeller. In addition, the prior art 4 has the problem that the floating body becomes too large because the first water guide pipe becomes larger than the second water guide pipe, the whole body in the marine becomes larger.

In short, both the prior art 3 and the prior art 4 have problem that the technology utilizing the floating body with the taper shape, the size of the floating body based on the size of the propeller for the power generator becomes too large to drive, and the tidal current cannot be accelerate enough.

It is an object of the present invention to provide a marine power generation system which is engineered to be able carry out power generation stably and highly efficiently, utilizing the huge source of energy even in marine current having insufficient speed to create a water current, similar to a water discharge from a dam, which is ideal for hydroelectricity.

### Means for solving the problems

In order to solve the problem shown above, NISHIOKA Toshihisa, the inventor of this invention, as the professor of the marine engineering field at the Georgia Institute of Technology and the Faculty of Maritime Sciences, KOBE University Graduate School of Maritime Sciences, has promoted the power generation for utilizing the marine power, which tidal current energy is huge amount but not enough speed for power generation. NISHIOKA Toshihisa has been studied the possibility of high efficient and stable power generation system utilizing tidal current energy, he invented the following marine power generation system.

In order to achieve the above-mentioned object, the present invention of a marine power generation system comprises; a water intake structure for taking in seawater, wherein the water intake structure comprises an aperture part for taking in seawater, and an upper seawater guide part for sending the taken-in seawater from the aperture port to inner portion; a seawater drop pipe comprising an upper terminal and a lower terminal for supplying the dropping space undersea for dropping the taken-in seawater from the upper terminal which is connected with the upper seawater guide part to the lower terminal; a power generator installed in the water drop pipe for generating electricity power by a dropping seawater motion and/or by a water pressure of the taken-in seawater; a submersible body connecting with the lower terminal of the seawater drop pipe for supplying a seawater tank space for temporally storing the discharged seawater from the lower terminal of the seawater drop pipe; a forced discharge part for discharging the stored seawater from the seawater tank space of the submersible body to the outer undersea forcibly.

According to the above-mentioned configuration of the first invention of the marine power generation system, the seawater drop pipe is set vertically in the marine, so it can supply the space which difference in vertical between marine surface and the submersible body similar to a water discharge from a dam, which is ideal for hydroelectricity. The marine power generation system utilizes this dam like space, the general power generator used in the general hydroelectric dam for power generation. The water intake structure may the structure floating on the sea surface apart from the shore by its buoyance or may the structure constructed on the shore if the aperture part is located in the sea. In either type, seawater taken-in from the aperture part is led to the seawater drop pipe through the upper seawater guide part. The seawater drop pipe should be set vertically for securing the difference in vertical, so if the aperture part is constructed on the shore, cliff is preferable place.

Next, there are 2 configuration mechanisms for installing the submersible body as the "forced discharge part".

The first configuration of the forced discharge part comprises a cylinder, a piston for reciprocating the piston motion in the cylinder, a first check valve connecting the cylinder to the seawater tank space of the submersible body while preventing a countercurrent, a second check valve connecting the cylinder to the outer undersea of the submersible body while preventing a countercurrent, and a power transmission mechanism for transmitting the power to the piston for piston motion by utilizing the power of the tidal current flowing around the submersible body,
the forced discharge part is operated as a piston-cylinder style seawater forced discharge mechanism including an intake phase for taking in the seawater from the seawater tank space to the cylinder, and a discharge phase for discharging the seawater from the cylinder to the outer undersea of the submersible body by pumping in synchronization with piston reciprocating movement.

The piston-cylinder style seawater forced discharge mechanism may be called as a "submersible piston-cylinder mechanism" working in the seawater discharging piston-cylinder cycle that seawater is taken in the cylinder and discharged from the cylinder to the outer undersea of the submersible body by piston motion. It may be categorized as a "natural power discharge" utilizing the tidal current.

As shown above, the piston-cylinder style seawater forced discharge mechanism discharges the stored seawater from the seawater tank space of the submersible body at low water pressure to the outer undersea of the submersible body at high water pressure forcibly. The piston motion can be achieved when the drive mechanism receives the strong pressure by the tidal current. The speed of the tidal current is not important but its pressure.

The above-mentioned piston-cylinder style seawater forced discharge mechanism can be installed in parallel. Plural piston-cylinder style seawater forced discharge mechanisms are installed around the submersible body in parallel, and each piston-cylinder style seawater forced discharge mechanisms is operated by piston-cylinder cycle for discharging seawater from the seawater tank space of the submersible body to the outer undersea of the submersible body. The total seawater discharge amount can be enhanced by parallelizing the piston-cylinder style seawater forced discharge mechanisms. The volume of the seawater tank space of the submersible body is limited, so the drop seawater amount taken-in from the upper seawater guide part is limited to the amount equivalent to the discharged seawater from the seawater tank space of the submersible body to the outer undersea forcibly by the piston-cylinder style seawater forced discharge mechanism. The seawater amount which can be used for the power generation at the seawater drop pipe is limited to the discharge amount.

Therefore, this system includes a seawater flow amount control part for controlling the taken-in seawater amount dropping from the upper seawater guide part through the seawater drop pipe as the amount corresponding to the discharge ability of the piston-cylinder style seawater forced discharge mechanisms. The seawater flow amount control part controls the dropping seawater amount from the upper seawater guide part to the seawater drop pipe for securing the piston-cylinder style seawater forced discharge mechanism can catch-up the discharge of the seawater to the outer undersea in order to prevent the whole system from being filled with the seawater.

Next, the second configuration of the forced discharge part comprises a electric pump style seawater discharging mechanism comprising a pump mechanism for discharging the seawater by pumping from the seawater tank space of the submersible body to the outer undersea of the submersible body, and a power generator installed to the outside of the submersible body driven by the tidal current around the submersible body.

In short, the electric pump style seawater discharging mechanism discharges the seawater forcibly to the outer undersea of the submersible body by the electric power obtained by the power generator installed to the outside of the submersible body driven by the tidal current around the submersible body.

The same as the piston-cylinder style seawater forced discharge mechanisms, the above-mentioned electric pump style seawater forced discharge mechanism can be installed in parallel. Plural pump style seawater forced discharge mechanisms are installed around the submersible body in parallel, and each pump style seawater forced discharge mechanisms is operated by pumping for discharging seawater from the seawater tank space of the submersible body to the outer undersea of the submersible body forcibly. The total seawater discharge amount can be enhanced by parallelizing the pump style seawater forced discharge mechanisms.

It is preferable that the second configuration of the forced discharge part includes the seawater flow amount control part for controlling the taken-in seawater amount dropping from the upper seawater guide part through the seawater drop pipe as the amount corresponding to the discharge ability of the piston-cylinder style seawater forced discharge mechanisms. The seawater flow amount control part controls the dropping seawater amount from the upper seawater guide part to the seawater drop pipe for securing the piston-cylinder style seawater forced discharge mechanism can catch-up the discharge of the seawater to the outer undersea in order to prevent the whole system from being filled with the seawater.

Moreover, it is preferable that the marine power generation system includes a ventilation pipe for securing the ventilation for both or either of the space lower than the installation part of the power generator to the seawater drop pipe and the seawater tank space of the submersible body, in order to prevent the whole system from being filled with the seawater.

It is an effective countermeasure for securing the ventilation to the space lower than the installation part of the power generator to the seawater drop pipe and the seawater tank space of the submersible body in order to prevent the whole system from being filled with the seawater and escape the whole system from unrunnable state.

Next, general use power generator for hydroelectric power generation can be applicable to the power generator for this marine power generation system.

There are various types of the power generator for hydroelectric power generation. Roughly saying, there are 2 types. One is an impulse water turbine. The other is a reaction water turbine.

The impulse water turbine works by converting the pressure head to velocity head. In short, the impulse water turbine receives the kinetic energy of the water stream and converts it to the kinetic energy of the turbine. As the impulse water turbine, the Pelton turbine and Opening round flow water turbine are known. If the generator employs the impulse water turbine such as the Pelton turbine, it is possible to obtain the power by generator turbine hitting by the dropping seawater from the seawater drop pipe.

The reaction water turbine works by the pressure head. In short, the pressure head is applied to the reaction water turbine and the applied water pressure is converted to the kinetic energy of the turbine. As the reaction water turbine, the Francis turbine, the propeller turbine and the Kaplan turbine are known. If the generator employs the reaction water turbine such as the Francis turbine, it is possible to obtain the power by generator turbine applying the seawater pressure introduced from the seawater drop pipe.

Next, a marine power generating method comprising; setting vertically a seawater drop pipe for supplying the space for dropping a seawater to undersea through it; installing a power generator generating power by a seawater falling kinetic energy or a seawater pressure energy introduced to the space of the seawater drop pipe via an aperture part; installing a submersible body for supplying a seawater tank space for temporally storing the discharged seawater from the lower terminal of the seawater drop pipe; installing a forced discharge part for discharging the stored seawater from the seawater tank space of the submersible body to the outer undersea forcibly; the seawater is taken in from the aperture part, the seawater is fallen through the seawater drop pipe, the generator installed in the seawater drop pipe generates power, the seawater taken-in the submersible body from the seawater drop pipe is discharged from the submersible body by the forced discharge part.

### Effect of the invention

According to the present invention of the marine power generation system, the seawater drop pipe is set vertically in the marine, so it can supply the space which difference in vertical between marine surface and the submersible body similar to a water discharge from a dam, which is suitable for hydroelectricity power generation.

The forced discharge of the seawater dropped in the submersible body to the outer undersea is conducted by the piston-cylinder style discharge mechanism with the first check valve and the second check valve for preventing a countercurrent. It may call as a "natural power discharge" utilizing the power of the tidal current flowing around the submersible body. If the forced discharge of the seawater is conducted by the pump style discharge mechanism, it may call as a "forced power discharge" by electricity obtained from the power of the tidal current flowing around the submersible body.

The piston-cylinder style discharge mechanism discharges the seawater from the seawater tank space of the submersible body with low water pressure to the outer undersea of the submersible body with high water pressure. However, the piston motion can be achieved if there is strong water pressure in the tidal current. The velocity of the tidal current is not important. The seawater amount to be dropped through the seawater drop pipe depends on the volume of the vacant space in the seawater tank space of the submersible body obtained by the piston-cylinder style discharge mechanism. The seawater drops through the seawater drop pipe can be dropped by the suitable velocity and the suitable water pressure for the hydroelectric power generation

The same as the piston-cylinder style discharge mechanism, the pump style discharge mechanism also discharges the seawater from the seawater tank space of the submersible body with low water pressure to the outer undersea of the submersible body with high water pressure. The electricity for driving the pump style discharge mechanism is obtained by the generator installed around the submersible body, the seawater in the seawater tank space of the submersible body is discharged forcibly. The seawater amount to be dropped through the seawater drop pipe depends on the volume of the vacant space in the seawater tank space of the submersible body obtained by the pump style discharge mechanism. The seawater drops through the seawater drop pipe can be dropped by the suitable velocity and the suitable water pressure for the hydroelectric power generation

As shown above, according to the present invention of the marine power generation system, the tidal current which is relatively low velocity can be converted to the suitable velocity and the suitable water pressure for the hydroelectric power generation.

### Brief description of the drawings

Fig.1 is a schematic view of the configuration of the marine power generation system 100 of the present invention.
Fig.2 is a schematic view showing the seawater flow.
Fig. 3 is a schematic view showing the configuration if the Pelton turbine is employed in the generator installed in the seawater drop pipe 20.
Fig. 4 is a schematic view showing the configuration if the Francis turbine is employed in the generator installed in the seawater drop pipe 20.
Fig.5 is a schematic view showing the configuration if the ventilation pipe 42 is employed to the seawater drop pipe 20 and the submersible body 40.
Fig.6 is a schematic view showing the forced discharge part 50 employing the piston-cylinder style discharge mechanism of the Embodiment 1.
Fig.7 is an operation of the seawater intake phase 1.
Fig.8 is an operation of the seawater intake phase 2.
Fig. 9 is an operation of the seawater discharge phase.
Fig.10 is a schematic view showing the forced discharge part 50a employing the pump style discharge mechanism of the Embodiment 2.
Fig.11 shows the problem of the tidal current generation in prior art.
Fig.12 shows a perspective view showing the tidal current generation system disclosed in the prior art 2.
Fig.13 is a perspective view showing the submarine style tidal current generation system disclosed in the prior art 3.
Fig.14 is a perspective view showing the submarine style tidal current generation system disclosed in the prior art 4.

### Detailed description of the preferred embodiment

Some embodiments of a marine power generation system according to the present invention are described below in reference to the relevant drawing. Needless to add, the claims of the present invention include but are not limited to the application, configuration, or quantity shown in the following embodiments.

### Embodiment 1

The marine power generation system 100 in embodiment 1 according to the present invention is described.

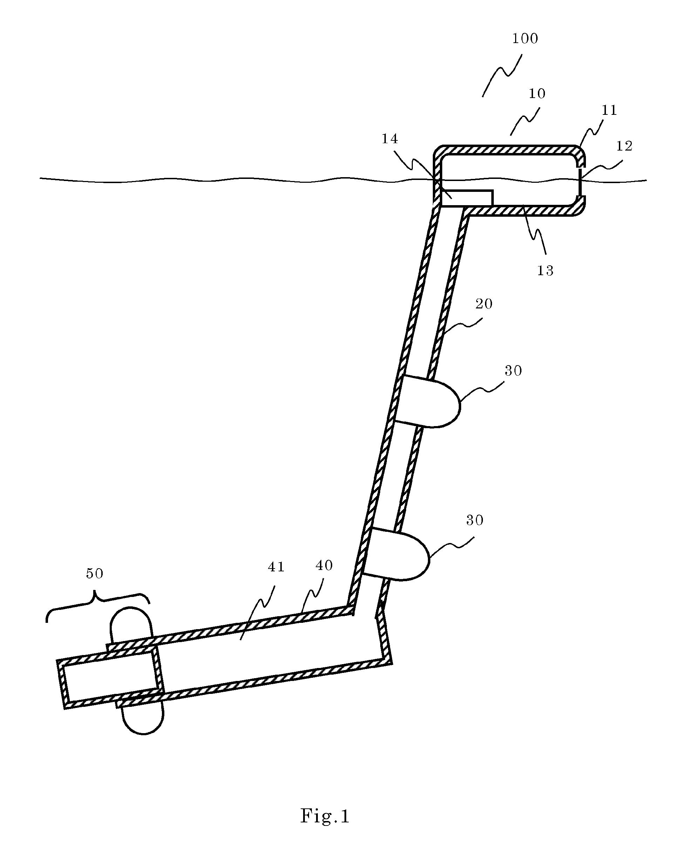

Fig.1 is a schematic view of the configuration of the marine power generation system 100 according to the present invention.

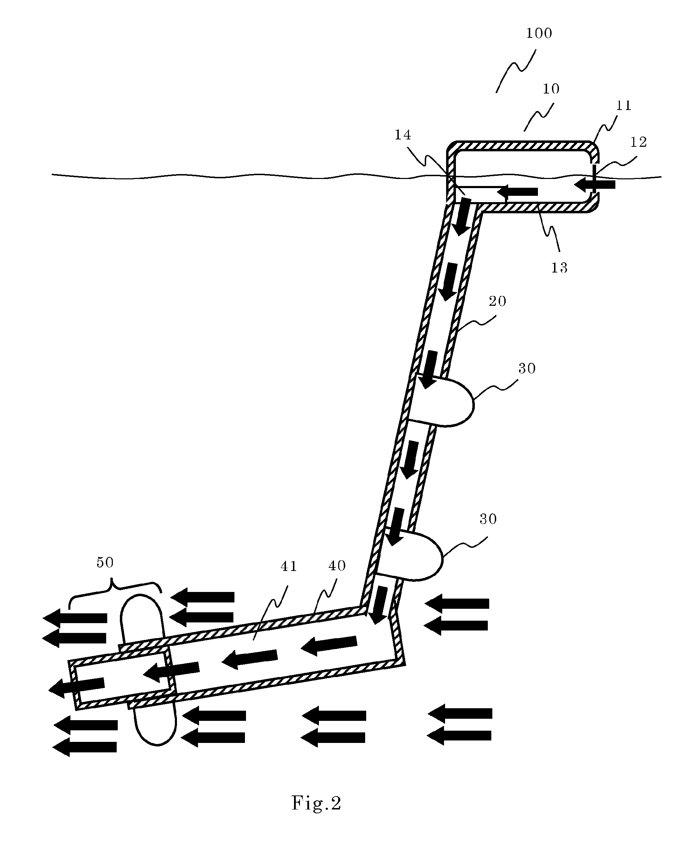

Fig.2 is a schematic view showing the seawater flow.

As shown in Fig.1, the marine power generation system 100 comprises a seawater intake structure 10, a seawater drop pipe 20, a generator 30, a submersible body 40 and a forced discharge part 50. As shown in Fig.2, there are seawater flows inside and outside of the marine power generation system 100. The marine power generation system 100 generates power by the taken-in seawater flow drop in the system and the tidal current flow around the system.

Hereinafter, each component is explained, then the operation of the marine power generation system 100 is explained.

Each component is explained as follows.

The seawater intake structure 10 may be a structure constructed on the ground along the coast or a sea surface floatation object floating by its buoyance on the sea surface apart from the coast.

The seawater intake structure 10 can take in the seawater to inside via the aperture part 12 either the seawater intake structure 10 is the construction on the ground or the sea surface floatation object. At least one portion of the aperture part 12 is located below the seawater line, the seawater can be taken in the inside. Moreover, there is the upper seawater guide part 13 for sending the taken-in seawater from the aperture port to inner portion. The size and the length of the upper seawater guide part 13 are not limited. It can be applicable if it can send the required amount of seawater to the seawater guide pipe 20

In this embodiment, as shown in Fig.1, the seawater intake structure 10 is a vessel shape type, it can be floated on the sea by the buoyance of the sea surface floatation object 11. The configuration shown in Fig.1, the shape of the seawater intake structure 10 is disclosed as the Xuanwu ship shape. Normal vessel does not have any structure for taking-in the seawater and sending the taken-in the seawater to drop to undersea at all. However, the marine power generation system 100 of the present invention includes the aperture part 12 for taking-in the seawater and the upper seawater guide part 13 for sending the taken-in seawater to further inner portion for utilizing the power generation.

If the water intake structure 10 is the structure constructed on the ground along the coast, the seawater drop pipe should be set vertically for securing the difference in vertical, the coast topography such as cliff is desirable.

In this configuration, the water intake structure 10 includes the seawater flow amount control part 14 for controlling the taken-in seawater amount. As described later, the marine power generation system 100 generates power by introducing the seawater to the sea water drop pipe 20 and driving the generator 30, so if the sea water drop pipe 20 is filled with seawater, the generator 30 operation is stopped. Therefore, the amount of taken-in seawater should be limited to the discharge ability of the forced discharge part 50. Therefore, the seawater flow amount control part 14 controls the amount of seawater taken-in to the sea water drop pipe 20.

The seawater drop pipe 20 is a pipe, as shown in Fig.1, the upper terminal of the seawater drop pipe 20 is connected to the water intake structure 10, the lower terminal of the seawater drop pipe 20 is connected to the submersible body 40. In short, the seawater drop pipe 20 is the structure between the water intake structure 10 and the submersible body 40.

The seawater drop pipe 20 supplies the space for dropping the taken-in seawater from the upper seawater guide part 13 to the submersible body 40. In short, the seawater drop pipe 20 supplies the space which difference in vertical between marine surface and the submersible body.

The structure strength is designed as enduring the water pressure in the marine. For example, stainless wireframe spectra pipe object can be employed as the material of the seawater drop pipe 20. The stainless wireframe spectra pipe object is lightweight and flexible, and has the mechanical strength 10 times as large as iron. In addition, the stainless wireframe spectra pipe object is hard to be rusted, and the metal fatigue does not happen on the stainless wireframe spectra pipe object. These merits are important for marine facility.

As shown above, the seawater drop pipe is set vertically in the marine, so it can supply the space which difference in vertical between marine surface and the submersible body 40 similar to a water discharge from a dam. In this model, the sea surface can be regarded as the water surface of the reservoir. The inner wall of the seawater drop pipe 20 can be regarded as the wall of the dam. The seawater taken-in the seawater drop pipe 20 can be regarded water mass for utilizing the hydroelectric power generation.

The generator 30 is a generator installed in the seawater drop pipe 20 and for generating electricity by the seawater kinetic energy of pressure energy. The general use power generator for hydroelectric power generation can be applicable to the generator for this marine power generation system 100.

There are various types of the power generator 30. Roughly saying, there are 2 types. One is an impulse water turbine. The other is a reaction water turbine.

The impulse water turbine works by converting the pressure head to velocity head. In short, the impulse water turbine receives the kinetic energy of the water stream and converts energy to the kinetic energy of the turbine. As the impulse water turbine, the Pelton turbine and Opening round flow water turbine are known.

The Pelton turbine is one of the impulse turbines. It is driven by hitting the bucket installed around the runner by the water flow. The general Pelton turbine is driven by hitting the bucket by the jet water flow from the nozzle. However, the Pelton turbine in the seawater drop pipe 20 is driven by hitting the bucket by the dropping seawater flow through the seawater drop pipe 20.

The Opening round flow water turbine is very familiar turbine which has been widely used as a general water wheel since ancient times. It is driven by hitting the plate installed around the runner.

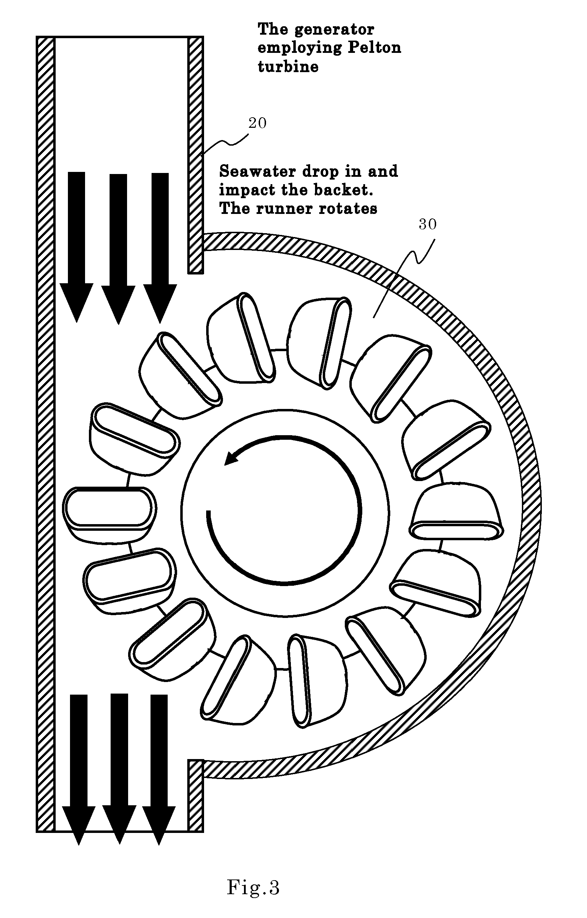

Fig. 3 is a schematic view showing the configuration if the Pelton turbine is employed in the generator 30 installed in the seawater drop pipe 20. The bucket of the Pelton turbine is installed to the seawater drop pipe 20 where the dropping seawater hits through. The introduced seawater to the seawater drop pipe 20 drops rapidly and violently colliding with the bucket of the Pelton turbine. The Pelton turbine rotates rapidly. The runner which the Pelton turbine installed to be rotated by impulse turn, the generator 30 (not illustrated) is rotated along with the runner and the electric power is obtained.

Next, the reaction water turbine works by the pressure head. In short, the pressure head is applied to the reaction water turbine and the applied water pressure is converted to the kinetic energy of the turbine. As the reaction water turbine, the Francis turbine, the propeller turbine and the Kaplan turbine are known.

The Francis turbine has the spiral runner turbine which receives the running-in seawater from the radial direction flow and discharges the running-out seawater to the axial direction flow. This Francis turbine is widely used as the hydroelectric power generation because the structure is relatively simple and the maintenance is easy.

The propeller turbine has the plural runner blades installed to the rotary axis with skew, which receives the running-in seawater from the axial direction flow and discharges the running-out seawater to the axial direction flow.

The Kaplan turbine is categorized as the propeller turbine, it can change the blade skew depending on the difference in vertical direction and the dropping water amount.

The cross-flow turbine is the turbine which the running water flows cross to the blade.

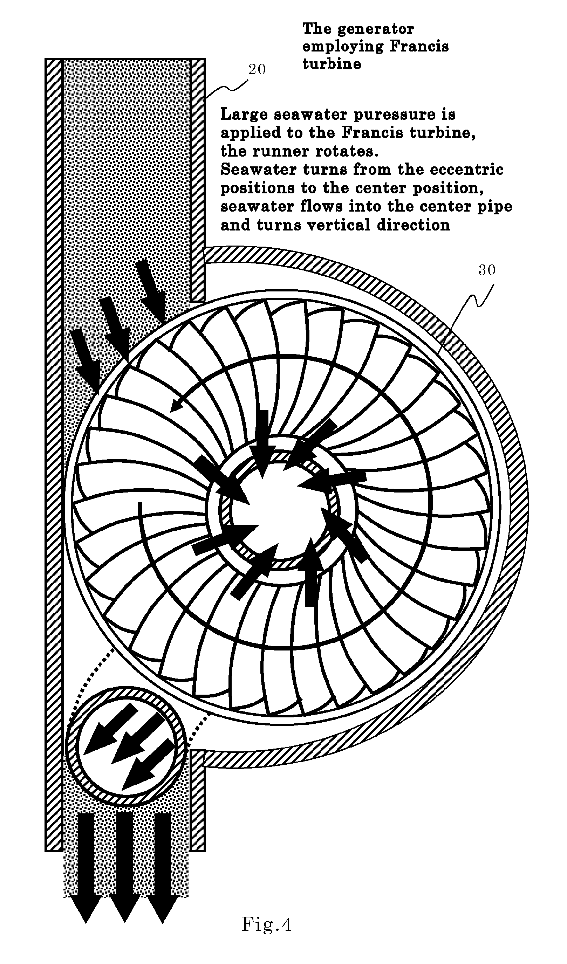

Fig. 4 is a schematic view showing the configuration if the Francis turbine is employed in the generator 30 installed in the seawater drop pipe 20. The eccentric positions of the Francis turbine faces the seawater drop pipe 20, the dropped seawater is accumulated at the part of the seawater drop pipe 20 near the upper portion of the generator 30 which employs the Francis turbine. Large seawater pressure is applied to the portion of the Francis turbine facing to the seawater drop pipe 20. The Francis turbine rotates by reaction turn. Every blade is installed to the runner with skew. The seawater will be turn from the eccentric positions of the Francis turbine to the deep inside of the center portion along the axis, then the applied seawater is discharge to the lower portion of the seawater drop pipe 20 as shown in Fig.4. The runner, which the Francis turbine installed to, is rotated by reaction turn, the generator (not illustrated) is rotated along with the runner and the electric power is obtained.

Next, the submersible body 40 supplies a seawater tank space for temporally storing the discharged seawater from the lower terminal of the seawater drop pipe 20. The submersible body 40 is connected with the lower terminal of the seawater drop pipe 20. The submersible body 40 is located at undersea, so the structure strength of the submersible body 40 is designed as enduring the water pressure in the marine. The seawater tank space 41 is a space for storing the discharged seawater from the lower terminal of the seawater drop pipe 20. However, the discharged seawater is further discharged to the outer undersea by the forced discharge part 50 in turn, so the seawater tank space 41 is a temporal storing space.

If the submersible body 40 is filled with seawater, the marine power generation system 100 approaches to the limit. If the seawater keeps on flowing through the seawater drop pipe 20, the marine power generation system 100 will stop because whole system is filled with the seawater. Therefore, the seawater flow amount control part 14 for controlling the taken-in seawater amount becomes important. Moreover, the ventilation pipe 42 is useful for the countermeasure.

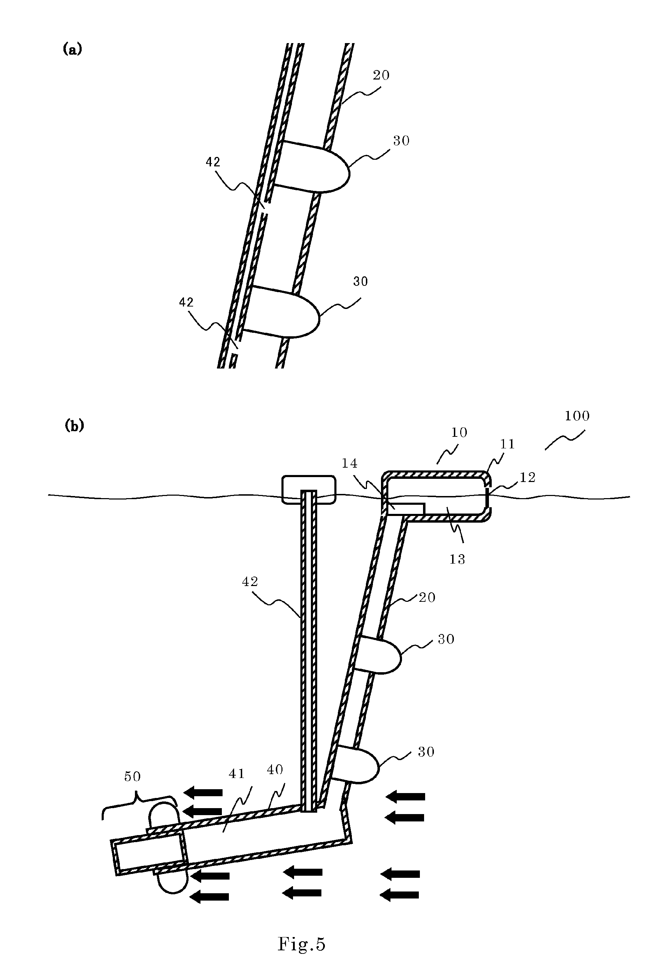

Fig.5 (a) is a schematic view showing the configuration if the ventilation pipe 42 is employed to the seawater drop pipe 20 and the submersible body 40. Fig.5 (b) is a schematic view showing the configuration if the ventilation pipe 42 is employed directly to the submersible body 40 besides the seawater drop pipe 20.

As shown above, if there is no ventilation pipe 42 to the submersible body 40 directly, the ventilation should be conducted via the seawater drop pipe 20 in which the seawater drops through. However, the taken-in amount of seawater is larger than that of the discharged water, the seawater is gradually filled with seawater. Therefore, the taken-in amount of seawater is controlled by the seawater flow amount control part 14 and the ventilation is secured by the ventilation pipe 42.

It is preferable that the ventilation pipe 42 is connected to the space lower than the installation part of the power generator 30 to the seawater drop pipe 20 and the seawater tank space of the submersible body 40 for securing the ventilation.

The forced discharge part 50 discharges the stored seawater from the seawater tank space 41 of the submersible body 40 to the outer undersea forcibly. The structure of the forced discharge part 50 is not limit which can discharge the taken-in seawater from the submersible body 40 to the outer undersea.

For example, as the configuration of the forced discharge part 50, there is a piston-cylinder type discharge mechanism and a pump style discharge mechanism. In this embodiment 1, the marine power generation system 100 of the present invention employs the piston-cylinder style discharge mechanism as the forced discharge part 50. The other configuration which employs the pump style discharge mechanism as the forced discharge part 50 is shown in Embodiment 2.

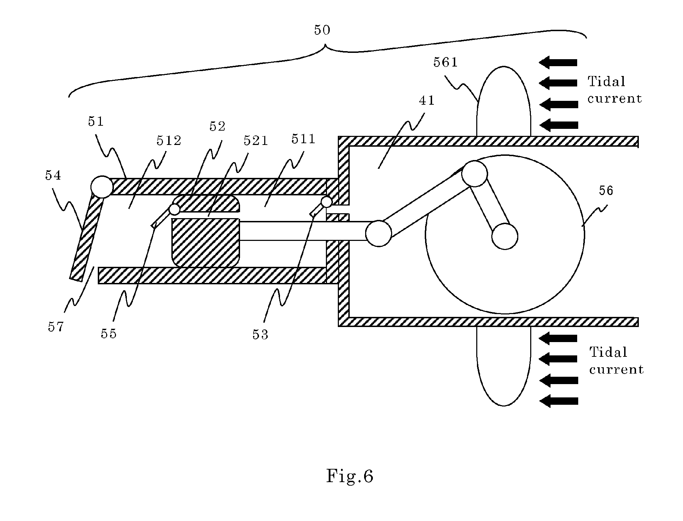

Fig.6 is a schematic view showing the forced discharge part 50 employing the piston-cylinder style discharge mechanism of the Embodiment 1. Fig.6 shows the basic operation, so fine mechanical structure and configuration are omitted.

As shown in Fig.6, the forced discharge part 50 employing the piston-cylinder type discharge mechanism comprises a cylinder 51, piston 52, the first check valve 53, the second check valve 54, the third check valve 55, the power transmission mechanism 56, and the discharge part 57.

The cylinder 51 is a cavity for taking-in the seawater to be discharged to the outer undersea temporally. The cylinder 51 has mechanical strength for enduring the high water pressure as described later. The inner diameter of the cylinder 51 is the same as the outer diameter of the piston 52. The inner diameter of the cylinder 51 is "D" in this description.

The installation portion of the cylinder 51 may be set anywhere of the submersible body 40. In this example, it is installed to the last portion of the submersible body 40.

The cylinder 51 is connected to the seawater tank space 41 of the submersible body 40 via the first check valve 53. The cylinder 51 is also connected to the outer undersea via the second check valve 54, the taken-in seawater is discharged from the seawater tank space 41 of the submersible body 40 to the outer undersea

The configuration shown in Fig.6, there is the cylinder 51 divided to 2 cylinder cavity by the piston 52. The first cylinder cavity near the seawater tank space 41 of the submersible body 40 is defined as the first cylinder 511. The second cylinder cavity near the outer undersea is defined as the second cylinder 512.

The piston 52 is the cylindrical shape. The piston 52 can be operated in piston motion in the cylinder 51. The outer diameter is corresponding to the cylinder 51. The outer diameter of the piston 52 is "D" in this description.

The configuration shown in Fig.6, there is the water pass 521 connecting the upper side and lower side through the piston 52. As described later, the water pass 521 of the piston 52 is utilized to pass the taken-in seawater of the first cylinder 511 to the second cylinder 512 in the piston-cylinder operation cycle.

The various technologies used in the piston engine mechanism can be applied to the cylinder 51 and piston 52. For example, the piston ring attachment is applied to the piston 52, the piston ring attachment can enhance for maintaining the seawater pressure during the seawater discharge operation.

The first check valve 53 is a check valve for connecting the cylinder 51 and the seawater tank space 41 of the submersible body 40 that limits flow to one direction. The example shown in Fig.6 described as the hinge type check valve in order to understand easily, but the structure of the check valve is not limited to the hinge type check valve.

As described later, the first check valve 53 is opened when introducing the seawater from the seawater tank space 41 of the submersible body 40 to the first cylinder 511 in the reciprocating cycle of the piston. The first check valve 53 is closed when transmitting the seawater from the first cylinder 511 to the second cylinder 512 for preventing the backflow of seawater from the first cylinder 511 to seawater tank space 41 of the submersible body 40.

The second check valve 54 is a check valve for connecting the cylinder 51 and the outer undersea around the submersible body 40 that limits flow to one direction. The example shown in Fig.6 described as the hinge type check valve in order to understand easily, but the same as the first check valve, the structure of the check valve is not limited to the hinge type check valve. The configuration shown in Fig.6, the second check valve 54 is installed to the discharge part 57 of the submersible body 40.

As described later, the second check valve 54 is opened when discharging the seawater from the second cylinder 512 to the outer undersea via the discharge part 57 in the reciprocating cycle of the piston. The second check valve 54 is closed when transmitting the seawater from the first cylinder 511 to the second cylinder 512 for preventing the backflow of seawater from the outer undersea to the second cylinder 512.

The third check valve 55 is a check valve for controlling the flow of the water pass 521 connecting the upper side and the lower side of the piston 52.

As described later, the third check valve 55 is opened when transmitting the seawater from the first cylinder 511 to the second cylinder 512 in the reciprocating cycle of the piston. The third check valve 55 is closed when discharging the seawater from the second cylinder 512 to the outer undersea via the discharge part 57 in the reciprocating cycle of the piston.

The power transmission mechanism 56 is a mechanism for transmitting the power to the piston 52 for operating the reciprocating cycle of the piston by converting the energy of the tidal current around the submersible body 40. The structure of the power transmission mechanism 56 is not limited if it can convert the energy of the tidal current to the kinetic energy of the piston cylinder cycle. In this configuration, the power transmission mechanism 56 includes a propeller 561 being rotated by the energy of the tidal current flowing around the submersible body 40, a rotary axis 562 of the propeller, a conversion mechanism 563 for converting the rotating energy obtained by the rotary axis 562 to the kinetic energy of the piston cylinder cycle.

The discharge part 57 is an opening to the outer under sea. The discharge part 57 connects the outer undersea and the second cylinder 512.

As described later, the discharge part 57 is opened when discharging the seawater from the second cylinder 512 to the outer undersea in the operation of the reciprocating cycle of the piston. The discharge part 57 is closed when transmitting the seawater from the first cylinder 511 to the second cylinder 512 by the third check valve 55.

The reciprocating cycle of the piston of the forced discharge part 50 including the piston-cylinder type seawater discharge mechanism is described phase by phase.

### [Seawater intake phase 1]

The seawater intake phase 1 is a phase for taking-in the seawater from the seawater tank space 41 of the submersible body 40 to the cylinder cavity 511 of the cylinder 51 with synchronizing the reciprocating motion of the piston 52.

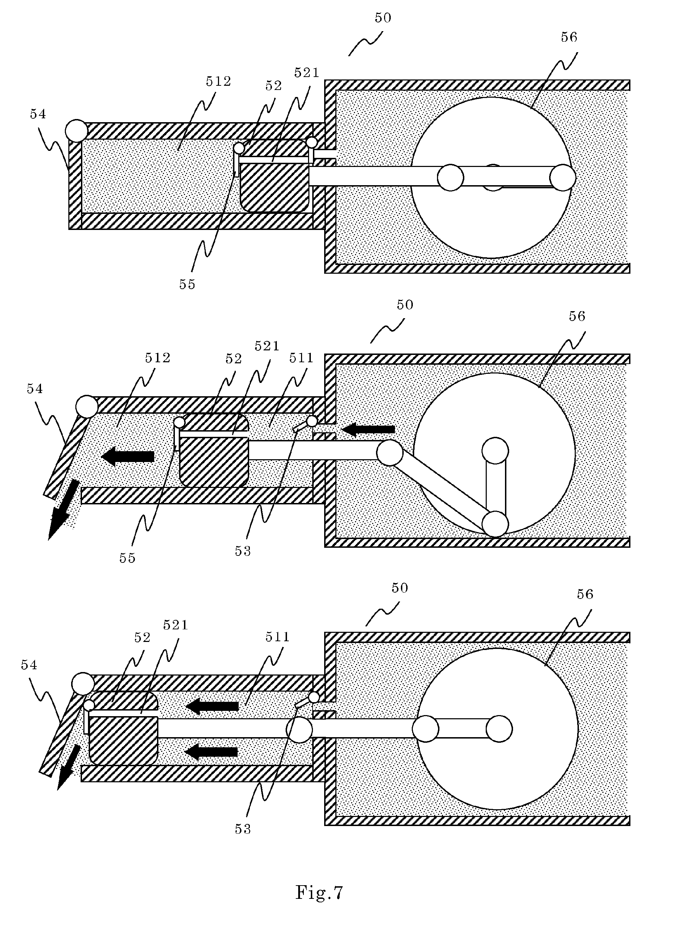

Fig.7(a) to Fig.7(c) show the operation of the seawater intake phase 1. Fig.7 (a) shows the start state of the seawater intake phase 1 and the start state of the seawater discharge phase. The piston 52 is located at the place (most right-hand place of the cylinder 51) where minimizing the first cylinder cavity 511 and maximizing the second cylinder cavity 512.

As shown in Fig.7 (a) to Fig.7(b), the piston 52 starts to move for enlarging the first cylinder cavity 511 and reducing the second cylinder cavity 512. The first check valve 53 is opened, and the seawater flows from the seawater tank space 41 of the submersible body 40 to the cylinder cavity 511 of the cylinder 51. The third check valve 55 is closed. Therefore, the volume of seawater taken-in from the seawater tank space 41 of the submersible body 40 corresponds to the enlarged volume of the first cylinder 511.

Fig.7 (c) shows the state that the piston 52 is located at the place (most left-hand place of the cylinder 51) where maximizing the first cylinder cavity 511 and minimizing the second cylinder cavity 512.

### [Seawater intake phase 2]

The seawater intake phase 2 is a phase for taking-in the seawater from the first cylinder cavity 511 of the cylinder 51 to the second cylinder cavity 512 via the seawater pass 521 with synchronizing the reciprocating motion of the piston 52.

The seawater taken-in the tank space 41 of the submersible body 40 is taken in the second cylinder cavity 512 of the cylinder 51 by these 2 phases of the seawater intake phase 1 and the seawater intake phase 2.

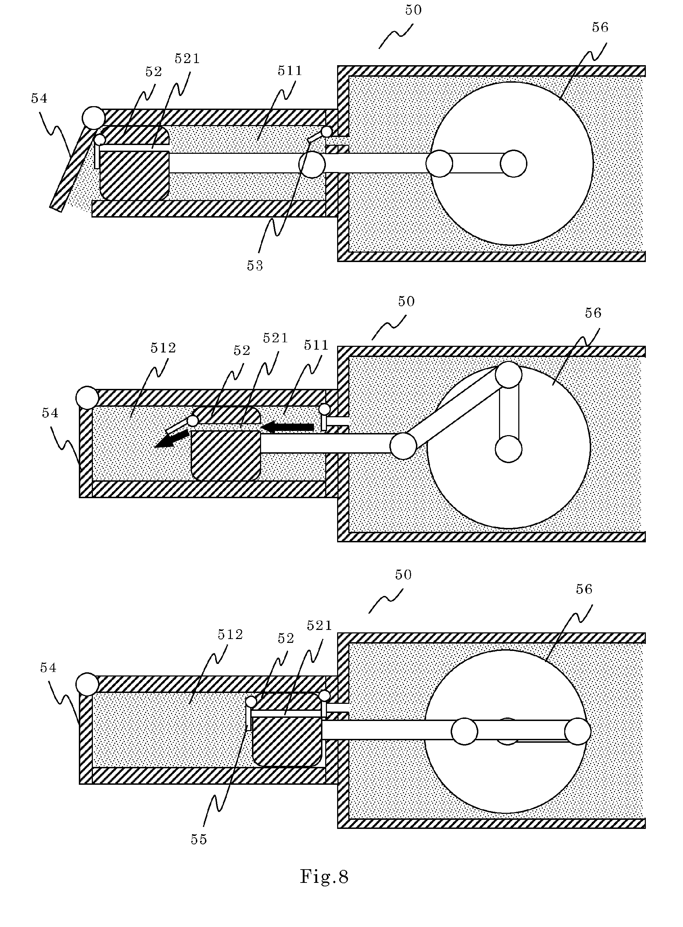

Fig.8(a) to Fig.8(c) show the operation of the seawater intake phase 2. Fig.8 (a) shows the start state of the seawater intake phase 2. The piston 52 is located at the place (most left-hand place of the cylinder 51) where maximizing the first cylinder cavity 511 and minimizing the second cylinder cavity 512.

As shown in Fig.8 (a) to Fig.8 (b), the piston 52 starts to move for reducing the first cylinder cavity 511 and enlarging the second cylinder cavity 512. The first check valve 53 is closed, so the seawater in the first cylinder cavity 511 is blocked the reverse flow to the seawater taken-in the tank space 41 of the submersible body 40. The third check valve 55 is opened, so the seawater flows from the first cylinder cavity 511 of the cylinder 51 to the second cylinder cavity 512 via the seawater pass 521. The second check valve 54 is closed, so the seawater is blocked to flow from undersea to the second cylinder cavity 512.

Fig.8 (c) shows the state that the piston 52 is located at the place (most right-hand place of the cylinder 51) where minimizing the first cylinder cavity 511 and maximizing the second cylinder cavity 512.

### [Seawater discharge phase]

The seawater discharge phase is a phase for discharging the seawater from the second cylinder cavity 512 of the cylinder 51 to the outer undersea via the discharge part 57 with synchronizing the reciprocating motion of the piston 52.

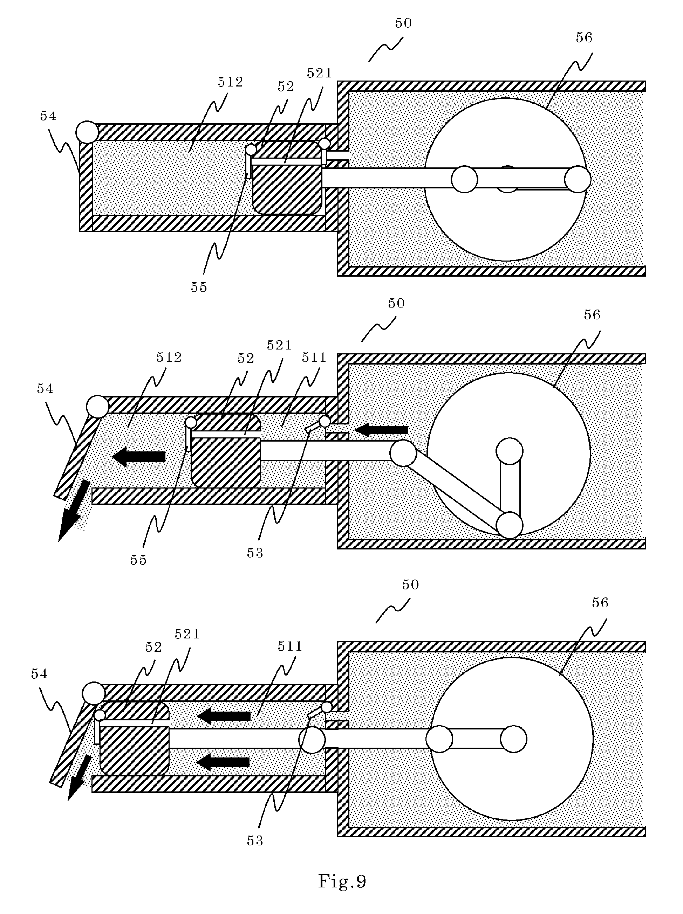

Fig.9 (a) to Fig.9 (c) show the operation of the seawater discharge phase.

Fig.9 (a) shows the start state of the seawater discharge phase and the start state of the seawater intake phase shown in Fig.7. The piston 52 is located at the place (most right-hand place of the cylinder 51) where maximizing the second cylinder cavity 512 and minimizing the first cylinder cavity 511.

As shown in Fig.9 (a) to Fig.9 (b), the piston 52 starts to move for reducing the second cylinder cavity 512 and enlarging the first cylinder cavity 511. The first check valve 53 is opened and the third check valve 55 is closed, so the seawater is blocked to flow from the second cylinder cavity 512 to the first cylinder cavity 511 via the seawater pass 521.

The open and close of the second check valve 54 is depending on the magnitude correlation between the seawater pressure of the outer undersea and the seawater pressure of the second cylinder cavity 512. The seawater pressure of the second cylinder cavity 512 can be controlled by impressing the pressure power by the power transmission mechanism 56. Therefore, the open and close of the second check valve 54 is depending on the pressure of the terminal of the piston applied by the outer undersea and the pressure of the propeller 561 applied by the outer undersea plus the tidal current power.

If the effective area of the propeller 561 is larger than the terminal area of the piston 52, the following relation is satisfied.
(the outer undersea around the submersible body 40) < (the seawater pressure of the second cylinder cavity 512)

Above shown relation is satisfied, the second check valve 54 is opened, the seawater of the second cylinder cavity 512 in higher pressure is discharged to the outer undersea in lower pressure.

As described above, the seawater is taken-in from the tank space 41 of the submersible body 40 to the first cylinder cavity 511 simultaneously.

This is the outline operation of the reciprocating cycle of the piston operated in the forced discharge part 50 employing the piston-cylinder type seawater discharge mechanism.

The forced discharge part 50 can installs the plural piston-cylinder type seawater discharge mechanism. Each piston-cylinder type seawater discharge mechanism can drive in parallel. Plural sets of the piston-cylinder type seawater discharge mechanism are arrayed around the submersible body 40. Each piston-cylinder type seawater discharge mechanism is driven by each reciprocating cycle of the piston, seawater is taken-in from the tank space 41 of the submersible body 40 and seawater is discharged to the outer undersea. The total seawater discharge ability becomes large.

The power generating ability of the whole marine power generation system is described.

The tank space 41 of the submersible body 40 can be regarded as a "buffer" for storing the seawater flow used for the power generation in the seawater drop pipe 20. Therefore, the discharge ability depends on the discharge ability of the forced discharge part 50 for the tank space 41 of the submersible body 40.

The marine power generation system 100 of the present invention of Embodiment 1 utilizes the tidal current as the natural resource, which speed is relatively low velocity but which energy amount is huge. The low velocity tidal current is caught by the propeller 561 and converted to the reciprocating cycle of the piston via the power transmission mechanism 56. The tidal current energy which is relatively low velocity can be converted to the reciprocating cycle of the piston at a multiple velocity of the tidal current velocity by adjusting the element such as the transmission rotary ratio and the cam reciprocating motion conversion ratio.

One sample is shown.

The cross-sectional area D of the cylinder cavity 51 is 3 m² (radius of 1 meter). The maximum width L1 of the first cylinder cavity 511 is 9 meters. The maximum width L2 of the second cylinder cavity 512 is 9 meters. The tidal current speed is 3 meters per second (it is calculated from the speed of the Strait of Dover 12 kilometers per hour). The transmission rotary ratio and the cam reciprocating motion conversion ratio is 1:3. The discharge ability per second is calculated as follows.

The piston 52 moves 9 meters per second calculated by the tidal current 3 meters per second and the transmission rotary ratio and the cam reciprocating motion conversion ratio is 1:3. The maximum width L1 of the first cylinder cavity 511 is 9 meters and the maximum width L2 of the second cylinder cavity 512 is 9 meters. Therefore, the piston reciprocating cycle can be driven for one turn per second.

The capacity of the second cylinder cavity 512 is 27 m³ calculated by the cross-sectional area D of the first cylinder cavity 51 and the maximum width L2 of the second cylinder cavity 512. In conclusion, the discharge ability of the system is 27 m³. The discharge ability of the forced discharge part 50 with one set of the piston-cylinder style seawater discharge mechanism is also 27 tons per second. In the above calculation, the velocity of the tidal current is assumed as 3 meters, which comes from the maximum velocity of the tidal current of the Strait of Dover. However, the maximum velocity does not always seen in the Strait of Dover. If the Kuroshio Japan Current is utilized instead of the Strait of Dover current, the discharge ability is calculated as follows. The velocity of the Kuroshio Japan Current is about 6 to 7 kilometers per hour, so about 1.5 meters per second. The condition obtained in Kuroshio Japan Current is about half that of the Strait of Dover. Therefore, if the Kuroshio Japan Current is utilized as the power source, the discharge ability of the forced discharge part 50 with one set of the piston-cylinder style seawater discharge mechanism is about 14 tons per second. The discharge ability of the forced discharge part 50 is about 14 tons per second, so the 14 tons of seawater can introduced to the seawater drop pipe 20 and can be utilized for power generation of the generator 30.

It is said that the fourth Kurobe dam in Japan discharges 10 tons of water per second for power generation. So, the power generation by the marine power generation system 100 employing the discharge ability of the forced discharge part 50 with one set of the piston-cylinder style seawater discharge mechanism roughly compares to the power generation by the fourth Kurobe dam in Japan.

The marine power generation system 100 can employs the plural sets of the piston-cylinder type seawater discharge mechanism in parallel. If four sets of the piston-cylinder type seawater discharge mechanism are employed, the discharge ability will be 500,000 tons per second in total. The marine power generation system 100 can take in the seawater to the seawater drop pipe 20 corresponding to the discharged amount of the forced discharge part 50. So the seawater of 500,000 tons per second can utilize for power generating. As shown above, the fourth Kurobe dam utilizes 10 tons of water per second for power generation, and it is said that the generation power of the fourth Kurobe dam is 300,000 kW. Therefore, the marine power generation system 100 which discharges ability is 500,000 tons per second can generate 1,500,000 kW.

The large scale power generation can be achieved by utilizing the tidal current which is the huge power source with strong seawater pressure but relatively low velocity for obtaining the discharge ability by converting the reciprocating cycle of the piston. The capacity obtained by the forced discharge part 50 for discharging the seawater to the outer undersea is utilized as the "seawater drop discharge" through the seawater drop pipe 20 in turn.

In the above-shown configuration, either or the combination of the seawater intake structure 10, the seawater drop pipe 20, the power generators 30, the submersible body 40, and the forced discharge part 50 can be parallelized. Moreover, the plural sets of marine power generation system 100 can be operated simultaneously.

### [Embodiment 2]

The second marine power generation system 100a in embodiment 2 according to the present invention is described. In the second marine power generation system 100a shown in this embodiment 2, the pump mechanism is employed in the forced discharge part.

The marine power generation system 100a shown in this embodiment 2 discharges the seawater in the forced discharge part 50a by the pump mechanism 58.

Other components such as the seawater intake structure 10, the seawater drop pipe 20, the power generators 30, the submersible body 40, and the other components which are not explained especially in Embodiment 2 may be the same as that of Embodiment 1. Regarding these other components, descriptions and drawings are omitted here.

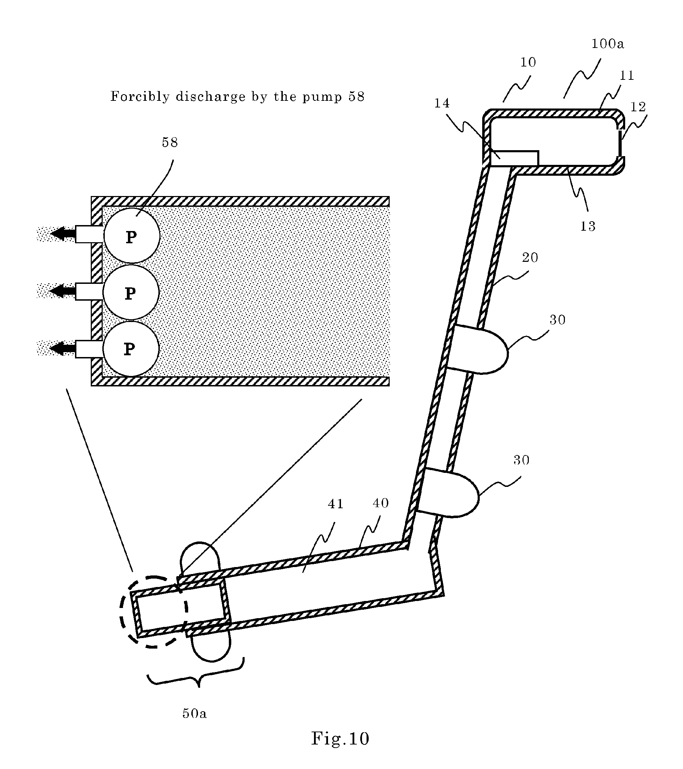

Fig.10 is a schematic view showing the forced discharge part 50a employing the pump style discharge mechanism of the Embodiment 2. Fig.10 shows the discharge operation simply, so other fine mechanical components and configuration are omitted here.

As shown in Fig.10, the forced discharge part 50a employing the pump type discharge mechanism comprises a pump 58, a power supply apparatus 59, and the discharge part 57.

It is necessary for the pump 58 to discharge the seawater to the outer undersea against seawater pressure generated at the depth where the submersible body 40 locates.

The power supply apparatus 59 supplies the electric power for driving the pump 58. The method of the power supply apparatus 59 for obtaining the electricity to be supplied to the pump is not limited.

The electricity obtained by the power generation at the submersible body 40 utilizing the tidal current may be supplied to the power supply apparatus 59, and the electricity obtained by the power generation by the generator 30 installed in the seawater drop pipe 20 may be supplied to the power supply apparatus 59. Of course, the combination of the above mentioned electricity supplying can be possible.

For example, as the configuration of the power generation utilizing the tidal current around the submersible body 40, the propeller components are installed around the submersible body 40 for obtaining the rotation torque for rotating the generator.

If the electricity is obtained by the power supply apparatus 59 installed around the submersible body 40, the pump 58 can be operated for discharging the seawater to the outer undersea.

The discharge ability of the pump 58 is obtained corresponding to the available electricity supplied by the power supply apparatus 59 installed around the submersible body 40. The amount of the seawater introducing from the sea surface to the seawater drop pipe 20 is limited to the corresponding amount that the pump can discharge by the seawater flow amount control part 14.

The amount of electricity obtained by the power supply apparatus 59 installed around the submersible body 40 can be improved along with the development of the tidal current power generation ability.

Moreover, in addition to the power supply apparatus 59 installed around the submersible body 40, a part of the electricity obtained by the generator 30 installed in the seawater drop pipe 20 can be utilized.

In the above configuration, the power supply apparatus 59 can be parallelized for enhancing the amount of electricity to be supplied to the pump mechanism.

In the above configuration, a set of the pump 58 and the power supply apparatus 59 can be parallelized for enhancing the ability of the forced discharge part 50a.

Moreover, in the above configuration, either or the combination of the seawater intake structure 10, the seawater drop pipe 20, the power generators 30, the submersible body 40, and the forced discharge part 50 can be parallelized. Moreover, the plural sets of marine power generation system 100a can be operated simultaneously.

Moreover, the discharge by the piston-cylinder type seawater discharge mechanism shown in Embodiment 1 and the pump type seawater discharge mechanism can be combined.

While some preferable embodiments of the sample storage according to the present invention are described above, it should be understood that various changes are possible, without deviating from the technical scope according to the present invention. Therefore, the technical scope according to the present invention is limited only by the claims attached.

### Industrial applicability

A marine power generation system according to the present invention can be used extensively for power generation system. For example, it can be applicable to the place where the tidal current is stable and relatively high velocity. The marine power generation system can be operated by floating the seawater intake structure 10 on the sea surface, sinking the submersible body 40 in the tidal current, and installing the seawater drop pipe 20 vertically.

### Explanation of Reference

100: marine power generating system
10: water intake structure
11: sea surface floatation object
12: aperture part
13: upper seawater guide part
14: seawater flow amount control part
20: seawater drop pipe
30: power generator
40: submersible body
41: seawater tank space
42: ventilation pipe
50: forced discharge part
51: cylinder
511: the first cylinder
512: the second cylinder
52: piston
521: seawater pass
53: the first check valve
54: the second check valve
55: the third check valve
56: power transmission mechanism
561: propeller
562: axis of the propeller
563: conversion mechanism
57: discharge part
58: pump
59: power supply apparatus

## Claims

1. A marine power generation system comprising;
a water intake structure for taking in seawater, wherein the water intake structure comprises an aperture part for taking in seawater, and an upper seawater guide part for sending the taken-in seawater from the aperture part to an inner portion;
a seawater drop pipe comprising an upper terminal and a lower terminal for supplying the dropping space undersea for dropping the taken-in seawater from the upper terminal which is connected with the upper seawater guide part to the lower terminal;
a power generator installed in the water drop pipe for generating electricity power by a dropping seawater motion and/or by a water pressure of the taken-in seawater;
a submersible body connected with the lower terminal of the seawater drop pipe for supplying a seawater tank space for temporally storing the discharged seawater from the lower terminal of the seawater drop pipe;
a forced discharge part for discharging the stored seawater from the seawater tank space of the submersible body to the outer undersea forcibly.

2. A marine power generation system according to claim 1, wherein the water intake structure is a marine floating body floating on the marine by its buoyancy.

3. A marine power generation system according to claim 1, wherein the forced discharge part comprises a cylinder, a piston for reciprocating the piston motion in the cylinder, a first check valve connecting the cylinder to the seawater tank space of the submersible body while preventing a countercurrent, a second check valve connecting the cylinder to the outer undersea of the submersible body while preventing a countercurrent, and a power transmission mechanism for transmitting the power to the piston for piston motion by utilizing the power of the tidal current flowing around the submersible body,
the forced discharge part is operated as a piston-cylinder style seawater forced discharge mechanism including an intake phase for taking in the seawater from the seawater tank space to the cylinder, and a discharge phase for discharging the seawater from the cylinder to the outer undersea of the submersible body by pumping in synchronization with piston reciprocating movement.

4. A marine power generation system according to claim 3, wherein plural piston-cylinder style seawater forced discharge mechanisms are installed around the submersible body in parallel, and each piston-cylinder style seawater forced discharge mechanisms is operated by piston-cylinder cycle for discharging seawater from the seawater tank space of the submersible body to the outer undersea of the submersible body.

5. A marine power generation system according to claim 3, further comprising a seawater flow amount control part for controlling the taken-in seawater amount dropping from the upper seawater guide part through the seawater drop pipe as the amount corresponding to the discharge ability of the piston-cylinder style seawater forced discharge mechanisms.

6. A marine power generation system according to claim 1, wherein the forced discharge part is a electric pump style seawater discharging mechanism comprising a pump mechanism for discharging the seawater by pumping from the seawater tank space of the submersible body to the outer undersea of the submersible body, and a power generator installed to the outside of the submersible body driven by the tidal current around the submersible body.

7. A marine power generation system according to claim 6, wherein a part of the obtained electric power generated by the power generator installed to the seawater drop pipe is utilized for the electric power for driving the pump mechanism of the electric pump style seawater discharging mechanism.

8. A marine power generation system according to claim 6, wherein the electric pump style seawater discharging mechanism is installed to the around the submersible body in parallel, each electric pump style seawater discharging mechanism discharges seawater from the seawater tank space of the submersible body to the outer undersea of the submersible body by pumping.

9. A marine power generation system according to claim 6, wherein further comprising a seawater flow amount control part for controlling the taken-in seawater amount dropping from the upper seawater guide part through the seawater drop pipe as the amount corresponding to the discharge ability of the electric pump style seawater forced discharge mechanisms.

10. A marine power generation system according to any one of claims 1 to 9, further comprising a ventilation pipe for securing the ventilation for both or either of the space lower than the part of the power generator installed to the seawater drop pipe and the seawater tank space of the submersible body, in order to prevent the whole system from being filled with the seawater.

11. A marine power generation system according to any one of claims 1 to 9, wherein the power generator is a power generator including the Pelton turbine or Francis turbine, seawater drops through the seawater drop pipe to the generator.

12. A marine power generation system according to any one of claims 1 to 9, wherein the seawater drop pipe is made of stainless wireframe spectra pipe object.

13. A marine power generating method comprising;
setting vertically a seawater drop pipe for supplying the space for dropping a seawater to undersea through it;
installing a power generator generating power by a seawater falling kinetic energy or a seawater pressure energy introduced to the space of the seawater drop pipe via an aperture part;
installing a submersible body for supplying a seawater tank space for temporally storing the discharged seawater from the lower terminal of the seawater drop pipe;
installing a forced discharge part for discharging the stored seawater from the seawater tank space of the submersible body to the outer undersea forcibly;
the seawater is taken in from the aperture part, the seawater is fallen through the seawater drop pipe, the generator installed in the seawater drop pipe generates power, the seawater taken-in the submersible body from the seawater drop pipe is discharged from the submersible body by the forced discharge part.
